# EUROPÄISCHE PATENTSCHRIFT

(11) **EP 4 259 484 B1**
(45) Veröffentlichungstag und Bekanntmachung des Hinweises auf die Patenterteilung: **02.12.2026**
(21) Anmeldenummer: 21863093.7
(22) Anmeldetag: 13.12.2021
(51) Int. Cl.: B60P 3/34, B60P 3/36, B60R 15/04

(54) **FREIZEITFAHRZEUG MIT AUSFAHRBARER RAUMERWEITERUNG**
LEISURE VEHICLE WITH EXTENDABLE SPACE-EXTENSION MEANS
VÉHICULE DE LOISIR POURVU D'UNE EXTENSION ESCAMOTABLE

(30) Priorität: 11.12.2020 DE 102020133100
(43) Veröffentlichungstag der Anmeldung: 18.10.2023
(73) Patentinhaber: Erwin Hymer Group SE, 88339 Bad Waldsee (DE)
(72) Erfinder: BUCK, Rainer, 88239 Wangen i. Allgäu (DE); DORN, Günter, 88281 Schlier (DE); METZLER, Marcus, 88339 Bad Waldsee (DE)
(74) Vertreter: Müller Schupfner & Partner Patent- und Rechtsanwaltspartnerschaft mbB (Muc)
(86) Internationale Anmeldenummer: PCT/EP2021/085567
(87) Internationale Veröffentlichungsnummer: WO 2022/123087

(56) Entgegenhaltungen:
- AU-A1- 2007 216 838
- CN-U- 209 176 585
- DE-A1- 102019 109 355
- DE-U1- 7 601 151
- US-A1- 2018 370 414

## Beschreibung

Die Erfindung betrifft ein Freizeitfahrzeug nach dem Oberbegriff des Patentanspruchs 1.

Unter einem Freizeitfahrzeug wird vorliegend ein Fahrzeug verstanden, das zumindest mithilfe von in diesem zeitweise und/oder fest montierten Einrichtungen und Möbeln dem Nutzer eine Möglichkeit zum Schlafen und Wohnen in diesem Fahrzeug bietet. Für eine anderweitige Verwendung, wenn das Fahrzeug nicht zum Campen benutzt wird, können diese Einrichtungen und Möbel zumindest zum Teil ohne gro3en Aufwand entfernt werden. Weiterhin umfasst der Begriff auch alle Campingfahrzeuge wie Wohnmobile und Wohnwagen, wobei eine Motorisierung der Fahrzeuge nicht erforderlich ist und ein Freizeitfahrzeug insbesondere auch einen Anhänger umfasst. Solche Freizeitfahrzeuge zeichnen sich durch einen größeren Wohnaufbau aus, wobei in der überwiegenden Anzahl der Fälle nicht die Originalkarosserie beispielsweise eines Kleintransporters zum Einsatz kommt, sondern ein größerer Aufbau von dem Hersteller des Freizeitfahrzeugs auf einem Chassis aufgebaute wird. Bei einem Wohnanhänger als Freizeitfahrzeug wird regelmäßig ein Anhängerchassis genutzt, auf dem ein Wohnaufbau speziell aufgebaut wird.

Vor allem in sehr kompakten Fahrzeugen ist der zur Verfügung stehende Raum dabei oftmals sehr eingeschränkt und zwingt somit zu Kompromissen bei der Benutzung.

Im Stand der Technik sind Freizeitfahrzeuge bekannt, deren Wohnraum durch ausfahrbare Elemente erweitert werden kann. Insbesondere sind auch solche Elemente bekannt, deren Wände aus aufblasbaren Hohlkammerelementen bestehen. Solche Raumerweiteren nach diesem Prinzip, auch als "push-out" bezeichnet sind beispielsweise aus der WO 2019/197412 A1 bekannt.

CN 209 176 585 U betrifft ein Karavan mit einem Fahrerbereich, einem Wohnraum und einem Schlafbereich sowie zwei beweglichen Bereichen.

Der vorliegenden Erfindung liegt die Aufgabe zugrunde, ein optimiertes Freizeitfahrzeug zur Verfügung zu stellen, das eine möglichst gute Nutzung erlaubt.

Diese Aufgabe wird durch ein Freizeitfahrzeug mit den Merkmalen des unabhängigen Patentanspruchs 1 oder Patentanspruch 7 gelöst. Vorteilhafte Weiterbildungen der Erfindung sind in den Unteransprüchen angegeben.

Durch den sinnvollen Einsatz der Push-Out Technologie lassen sich speziell in der Wohnsituation deutliche bessere Raumverhältnisse schaffen, die die Nutzung deutlich verbessern oder sogar erst ermöglichen

In einer vorteilhaften Ausgestaltung weisen die Push-Out Einheit als Begrenzungswand seitlich zur Ausfahrrichtung zumindest in Teilabschnitten aufblasbare Elemente auf.

Durch die Aufblastechnologie sind im eingefahrenen, nicht aufgeblasenen Zustand keine innen liegenden Wände notwendig, wie bei bisherigen Lösungen. Dies fuhrt sowohl optisch, als auch funktional zu Vorteilen für den Benutzer.

Die aufblasbaren Elemente können aus Hohlkammern gebildet sein, die in ihrem Inneren die Seitenflachen verbindende Zugelemente, wie etwa Faden und/oder Gewebebänder aufweisen, insbesondere können die Hohlkammern Drop-Stich Elemente sein.

Durch diese Technik ergeben sich im aufgeblasenen Zustand sehr feste Hohlkammern, die auch beispielsweise als waagerechte Elemente tragfähig und belastbar sind. Zusätzliche Ausschreibungselemente sind dann nur in sehr geringem Umfang oder gar nicht für die Push-Out Einheiten erforderlich.

Vorteilhaft kann die Sanitärzelle eine Dusche und/oder Toilette umfassen.

Die Raumvergrößerung kann in speziellen Teilbereichen eines Freizeitfahrzeuges erfolgen. Durch eine Vergrößerung des Innenraumes mit Hilfe eines Push-Out entsteht zusätzlich nutzbares Volumen. Dieses Volumen kann unterschiedlichen Nutzungsarten zugeteilt werden. Erfindungsgemäß ist der Push-Out seitlich angeordnet und ist der Raum der Sanitärzelle vergrößerbar. Somit kann der Raum, der für das Bad/WC vorgesehen ist, derart vergrößert werden, dass auch die Nutzung als Dusche ermöglicht wird. In einem weiteren Fall kann durch den Einsatz eines Push-Out aus einem Raum der auf Grund zu geringer Tiefe nicht als Dusche nutzbar ist, eine sehr gut nutzbare erzeugt werden.

Vorteilhaft ist das Freizeitfahrzeug ein Camper Van ist, bei dem eine serienmäßige Karosserie eines Transporters, insbesondere Blechkarosserie, mit Wohnelementen ausgebaut ist.

Gerade bei diesen Fahrzeugen ist eine sehr hohe Flexibilität und kompakte Bauweise der Einrichtung vorteilhaft, da nur beschränkt Bauraum zur Verfügung steht. Durch die hier beschriebenen Push-Out Einheiten kann während des Nutzens als Wohnraum und bei stehendem Fahrzeug der Platz vorteilhaft erweitert werden.

Erfindungsgemäß nutzt das Push Out Element als äußere Begrenzungswand ein Teilelement der Originalkarosserie, insbesondere ein Türelement.

So ist es beispielsweise möglich, dass eine seitliche Schiebetür als Wand einer ein Push-Out Einheit nach außen verschoben wird. Ebenso ist es auch denkbar, dass die Hecktüren oder eine Heckklappe eines Kleintransporters nach hinten als Wandflache einer Push-Out Einheit verschoben wird. Vorteilhaft sind diese Wandflachen einschließlich eventueller Abdichtungen gegen Wetter bereits beim serienmäßigen Fahrzeug vorhanden. Die Öffnungsmechanik der seitlichen Schiebetür oder von Hecktüren bzw. eine Heckklappe wird dann durch die Push-Out Einheit ersetzt. Jedoch können aufwändige und teure Karosseriearbeiten einschließlich Lackiererarbeiten vermieden werden.

Die Aufgabe wird auch gelöst durch ein Freizeitfahrzeug mit den Merkmalen des unabhängigen Patentanspruchs 7.

Wird die Push-Out Einheit im Heck eines Freizeitfahrzeuges eingesetzt, ermöglicht dies, z.B. ein Bett derart zu verlängern, dass die Nutzung als Längsbett an Stelle des bisherigen Querbettes ermöglicht wird. Außerdem kann durch eine im Heck angeordnete Push-Out Einheit eine Fahrzeugverlängerung erzeugt werden, die auch während der Fahrt nutzbar sein kann. Dieser Raum kann z.B. als Garage bzw. Gepäckraum genutzt werden. Ist die Garage nicht mehr notwendig, weil die darin transportierten Gegenstande herausgenommen wurden (z.B. wenn man sich auf dem Campingplatz befindet) kann der Raum als Wohn-/Schlaf- oder Duschraum verwendet werden.

Die Heck-Push-Out Einheit kann als Begrenzungswand seitlich zur Ausfahrrichtung zumindest in Teilabschnitten aufblasbare Elemente aufweisen.

Durch die Aufblastechnologie sind im eingefahrenen, nicht aufgeblasenen Zustand keine innen liegenden Wände notwendig, wie bei bisherigen Lösungen. Dies führt sowohl optisch, als auch funktional zu Vorteilen für den Benutzer.

Vorteilhaft sind die aufblasbaren Elemente aus Hohlkammern gebildet, die in ihrem Inneren die Seitenflachen verbindende Zugelemente, wie etwa Faden und/oder Gewebebänder aufweisen, insbesondere sind die Hohlkammern Drop-Stich Elemente.

Durch diese Technik ergeben sich im aufgeblasenen Zustand sehr feste Hohlkammern, die auch beispielsweise als waagerechte Elemente tragfähig und belastbar sind. Zusätzliche Ausschreibungselemente sind dann nur in sehr geringem Umfang oder gar nicht für die Push-Out Einheiten erforderlich. Eine solche Push-Out Einheit am Heck kann aufgrund der großen Steifigkeit auch während der Fahrt ausgefahren bleiben, solange sie innerhalb der gesetzlich Vorgaben nicht zu weit übersteht. Dadurch kann das mögliche Transportvolumen und Platz für Gepäck geschaffen werden, während im Campingbetrieb eine anderweitige Nutzung, etwa als Erweiterung einer Bettflache aber auch bei entsprechender Hohe als Dusche- und/oder Toilettenraum möglich ist.

Das Freizeitfahrzeug kann ein Camper Van sein, bei dem eine serienmäßige Karosserie eines Transporters, insbesondere Blechkarosserie, mit Wohnelementen ausgebaut ist.

Es ergeben sich hier die bereits oben geschilderten Vorteile.

Das Heck-Push-Out Element kann als äußere Begrenzungswand ein Teilelement der Originalkarosserie, insbesondere eine Hecktür oder Heckklappe, nutzen.

Auch hier ergeben sich die bereits zuvor geschilderten Vorteile.

Ein Freizeitfahrzeug kann sowohl eine Push-Out Einheit seitlich wie auch eine Push-Out Einheit im Heck in Kombination aufweisen.

Die Anordnung eines ausfahrbaren Elements in der Heckwand mit allen weiteren Varianten und Unteransprüchen kann aber auch völlig unabhängig von der Anordnung einer Sanitärzelle hinter dem Fahrersitz seitlich erfolgen und umgekehrt.

Weitere Vorteile und Einzelheiten der Erfindung werden anhand der in den schematischen Figuren dargestellten Ausführungsbeispiele naher erläutert. Hierbei zeigt
- Fig. 1: seitlich ein erstes Ausführungsbeispiel eines Freizeitfahrzeugs mit einem Push-Out im Heckbereich,
- Fig. 2: ein weiteres Ausführungsbeispiel eines Freizeitfahrzeugs mit einem Push-Out im Heckbereich und an der Fahrzeugseite,
- Fig. 3: ein weiteres Ausführungsbeispiel eines Freizeitfahrzeugs mit einem Push-Out im Heckbereich und an der Fahrzeugseite,
- Fig. 4: ein nochmals weiteres Ausführungsbeispiel eines Freizeitfahrzeugs mit einem Push-Out im Heckbereich und an der Fahrzeugseite,
- Fig. 5: ein weiteres Ausführungsbeispiel eines Freizeitfahrzeugs mit einer Sitzbank in einem Push-Out im Heckbereich und
- Fig. 6: seitlich ein Ausführungsbeispiel eines Freizeitfahrzeugs mit einem hohen Push-Out im Heckbereich

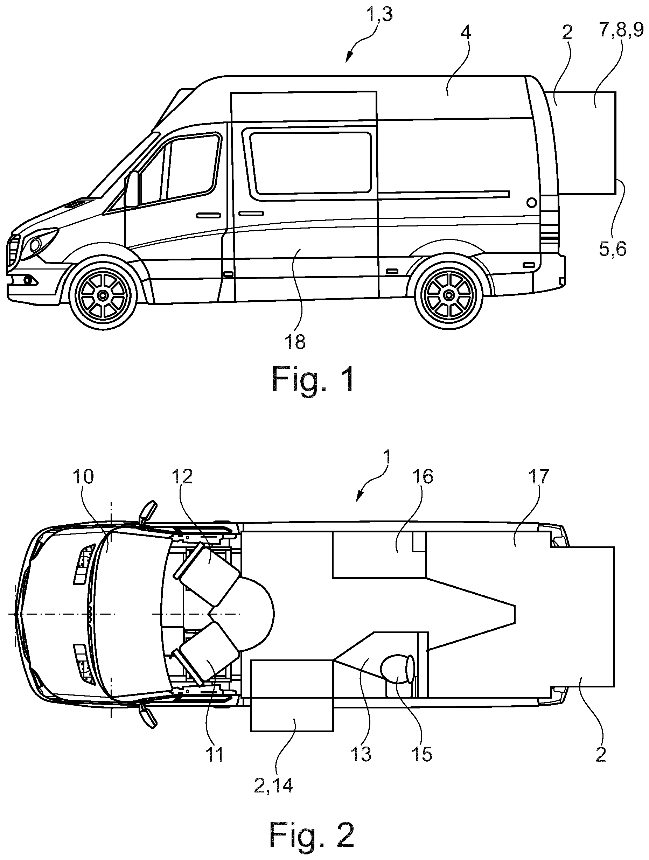

Die Fig. 1 zeigt seitlich ein erstes Ausführungsbeispiel eines Freizeitfahrzeugs 1 mit einer Push-Out Einheit 2 im Heckbereich. Bei dem Freizeitfahrzeug 1 handelte sich um einen Camper Van 3, bei dem eine serienmäßige Karosserie eines Transporters, insbesondere Blechkarosserie 4, mit Wohnelementen ausgebaut ist. Bei der hier dargestellten Version kann beispielsweise ein Teil eines Türelements 5, zum Beispiel eine Heckklappe 6 oder ein oberer Teil einer solchen Heckklappe 6 mit Wanden aus aufblasbaren Elementen 7, die aus Hohlkammern 8 bestehen, zusammen die Push-Out Einheit 2 bilden. Die Hohlkammern 8 können dabei derart aufgebaut sein, dass in ihrem Innern die Seitenflachen verbindende Zugelemente, wie etwa Faden und/Gewebebänder vorgesehen sind, insbesondere kann es sich um Drop-Stitch 9 Elemente handeln. Durch die hier in Seitenansicht von außen ausgefahren dargestellte Push-Out Einheit 2 im Heckbereich kann ein im Heck angeordnetes Bett in seiner Liegeflache ausgeweitet werden und beispielsweise ein Liegen in Längsrichtung oder schräger Längsrichtung ermöglicht werden, wenn ansonsten aus Platzgründen nur eine querliegende Nutzung möglich wäre. Weiterhin weisen die beispielhaft genannten Drop-Stitch 9 Elemente eine so große Steifigkeit und Tragfähigkeit auf, dass auch eine Nutzung während der Fahrt als beispielsweise zusätzlicher Gepäckraum denkbar ist.

Die Fig. 2 zeigt ein weiteres Ausführungsbeispiel eines Freizeitfahrzeugs 1 mit einer Push-Out Einheit 2 im Heckbereich und an der Fahrzeugseite von oben im Grundriss. Einander entsprechende Bauelemente sind mit den gleichen Bezugszeichen wie zuvor versehen. Unmittelbar anschließend an eine Fahrerkabine 10 mit einem Fahrersitz 11 und einem Beifahrersitz 12, die hier in einer nach hinten gedrehten Position zur Nutzung während des Campens als weitere Sitzgelegenheit dargestellt sind, ist an der Seitenwand 12 eine Sanitärzelle 13 mit einer Push-Out Einheit 2 als Dusche 14 und einer Toilette 15 angeordnet. Gegenüberliegend und insgesamt etwas weiter nach hinten versetzt ist eine Küche 16 angeordnet und diesen folgend ein Bett 17, das durch eine ausgefahrene weitere Push-Out Einheit 2 in seiner Lange erweitert ist.

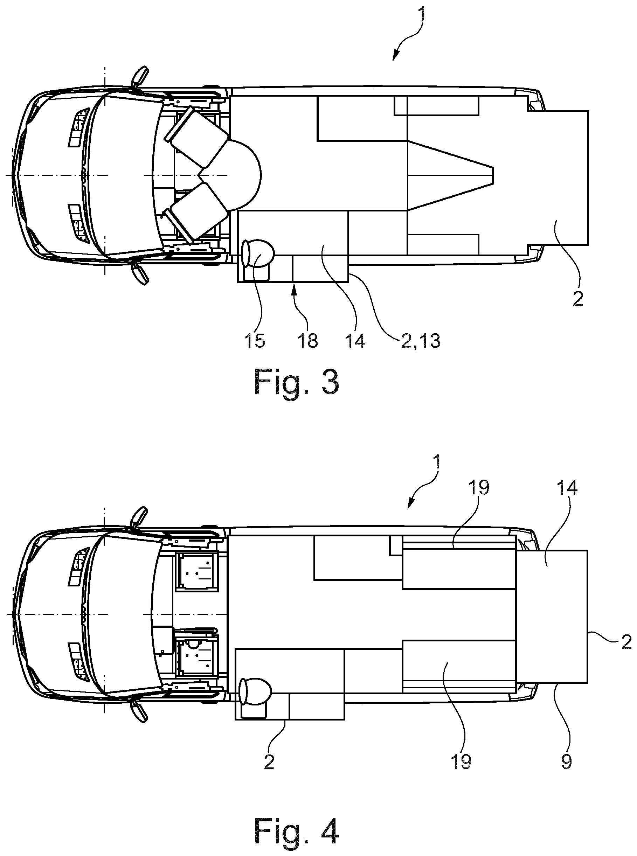

Die Fig. 3 zeigt ein weiteres Ausführungsbeispiel eines Freizeitfahrzeugs 1 mit einem Push-Out 2 im Heckbereich und an der Fahrzeugseite. Abweichend von dem zuvor geschilderten Ausführungsbeispiel ist hier die Toilette 15 zusammen mit der Dusche 14 in der Push-Out Einheit 2 an der Fahrzeugseite angeordnet. Dadurch befindet sich die gesamte Sanitärzelle 13 in der Push Out Einheit 2. vorteilhaft ist es bei dieser Ausführungsform denkbar, dass beispielsweise eine in der Fig. 1 erkennbare seitliche Schiebetiir18 als Wandelement der Push-Out Einheit 2 dient.

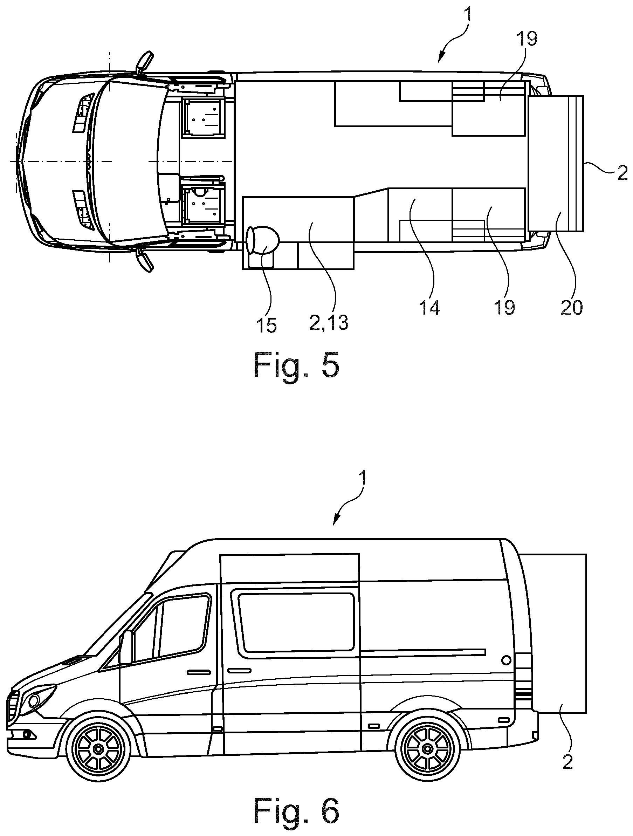

Die Fig. 4 zeigt ein nochmals weiteres Ausführungsbeispiel eines Freizeitfahrzeugs 1 mit einer Push-Out Einheit 2 im Heckbereich und an der Fahrzeugseite. Bei dieser ist gegenüber der Ausführung in der Fig. 3, im Heckbereich kein Bett angeordnet, sondern zwei gegenüber angeordnete Sitzbänke 19, die gegebenenfalls zu einer Liegeflache umgebaut werden können. Die Push-Out Einheit 2 im Heckbereich weist hier eine größere Höhe auf, wie beispielsweise in der Seitenansicht in der Fig. 6 zu erkennen. Dadurch ergibt sich eine Stehhöhe oder annähernde Stehhöhe im Bereich der Push-Out-Einheit 2. Diese Erweiterung kann daher als geräumigere und bequemere Dusche 14 genutzt werden. Zugleich ist es aber auch denkbar, aufgrund der großen Steifigkeit und Festigkeit von beispielsweise Drop-Stitch Elementen 9, die Push-Out Einheit 2 auch während der Fahrt ausgefahren zu belassen und als zusätzlichen Stauraum bzw. Garage zu nutzen.

Die Fig. 5 zeigt ein nochmals weiteres Ausführungsbeispiel eines Freizeitfahrzeugs 1 mit einer Push-Out Einheit 2 im Heckbereich und an der Fahrzeugseite. In dieser Ausführung ist in der Push-Out Einheit 2 in der Seitenwand als Sanitärzelle 13 die Toilette 15 angeordnet. Getrennt von dieser ist die Dusche 14 im Inneren weiter hinten angeordnet und die weitere Push-Out Einheit 2 im Heckbereich dient zur Aufnahme einer zusätzlichen Sitzbank 20 die zusammen mit den gegenüberliegend angeordneten Sitzbanken 19 eine insgesamt U-förmige Sitzgelegenheit ergibt, wenn die hintere Push-Out Einheit 2 im Heckbereich ausgefahren ist.

Die Fig. 6 zeigt wie bereits zuvor beschrieben ein Freizeitfahrzeug 1 mit einer Push-Out Einheit 2 im Heckbereich mit einer größeren Höhe.

## Patentansprüche

1. Freizeitfahrzeug, mit einem Grundriss, bei dem unmittelbar hinter einer Fahrerkabine (10) mit einem Fahrersitz (11) auf mindestens einer Seite an der Seitenwand sich eine Sanitärzelle (13) befindet und gegenüberliegend in Fahrtrichtung gleichauf oder weiter nach hinten eine Kücheneinheit (16) angeordnet ist,
wobei sich die Sanitärzelle (13) unmittelbar hinter der Fahrerkabine (10) befindet, und wobei die Push Out Einheit (2) als äußere Begrenzungswand ein Teilelement der Originalkarosserie nutzt,
**dadurch gekennzeichnet,**
**dass** die Sanitärzelle (13) zumindest teilweise als Push-Out Einheit (2) ausgeführt ist, die zur Platzvergrößerung ausgefahren werden kann, wobei der Raum der Sanitärzelle vergrößert wird.

2. Freizeitfahrzeug nach Anspruch 1,
**dadurch gekennzeichnet,**
**dass** die Push-Out Einheit (2) als Begrenzungswand seitlich zur Ausfahrrichtung zumindest in Teilabschnitten aufblasbare Elemente aufweist.

3. Freizeitfahrzeug nach Anspruch 2,
**dadurch gekennzeichnet,**
**dass** die aufblasbaren Elemente aus Hohlkammern (8) gebildet sind, die in ihrem Inneren die Seitenflächen verbindende Zugelemente, wie etwa Fäden und/oder Gewebebänder, aufweisen, insbesondere die Hohlkammern (8) Drop-Stich (9) Elemente sind.

4. Freizeitfahrzeug nach einem der vorhergehenden Ansprüche,
**dadurch gekennzeichnet,**
**dass** die Sanitärzelle (13) eine Dusche (14) und/oder Toilette (15) umfasst.

5. Freizeitfahrzeug nach einem der vorhergehenden Ansprüche,
**dadurch gekennzeichnet,**
**dass** das Freizeitfahrzeug ein Camper Van (3) ist, bei dem eine serienmäßige Karosserie eines Transporters, insbesondere Blechkarosserie (4), mit Wohnelementen ausgebaut ist.

6. Freizeitfahrzeug nach Anspruch 5,
**dadurch gekennzeichnet,**
**dass** das Teilelement der Originalkarosserie ein Türelement (18) ist.

7. Freizeitfahrzeug nach einem der vorhergehenden Ansprüche,
**dadurch gekennzeichnet,**
**dass** eine Heck-Push-Out Einheit (2) als Begrenzungswand seitlich zur Ausfahrrichtung zumindest in Teilabschnitten aufblasbare Elemente aufweist.

8. Freizeitfahrzeug nach Anspruch 7,
**dadurch gekennzeichnet,**
**dass** die aufblasbaren Elemente aus Hohlkammern (8) gebildet sind, die in ihrem Inneren die Seitenflachen verbindende Zugelemente, wie etwa Fäden und/oder Gewebebänder, aufweisen, insbesondere die Hohlkammern Drop-Stich (9) Elemente sind.

9. Freizeitfahrzeug nach einem der Ansprüche 7 bis 8,
**dadurch gekennzeichnet,**
**dass** das Freizeitfahrzeug ein Camper Van (3) ist, bei dem eine serienmäßige Karosserie eines Transporters, insbesondere Blechkarosserie (4), mit Wohnelementen ausgebaut ist.

10. Freizeitfahrzeug nach Anspruch 9,
**dadurch gekennzeichnet,**
**dass** die Heck-Push-Out (2) Einheit als äußere Begrenzungswand ein Teilelement der Originalkarosserie, insbesondere eine Hecktür oder Heckklappe, nutzt.

11. Freizeitfahrzeug nach einem der Ansprüche 1 bis 6 mit den weiteren Merkmalen eines oder mehrerer der Ansprüche 7 bis 10.

## Claims

1. Recreational vehicle with a floor plan in which a sanitary cell (13) is located immediately behind a driver's cab (10) with a driver's seat (11) on at least one side at the side wall, and a kitchen unit (16) is arranged opposite in the direction of travel at the same level or further to the rear, wherein the sanitary cell (13) is located immediately behind the driver's cab (10) and wherein the push-out unit (2) uses a sub-element of the original body as outer boundary wall, **characterized in that** the sanitary cell (13) is at least partially designed as a push-out unit (2) that can be extended to increase space, wherein the interior of the sanitary cell is enlarged.

2. Recreational vehicle according to claim 1, **characterized in that** the push-out unit (2) comprises inflatable elements as boundary wall lateral to the extension direction at least in sections.

3. Recreational vehicle according to claim 2, **characterized in that** the inflatable elements are formed from hollow chambers (8) which, in their interior, comprise tension elements, such as threads and/or fabric strips, connecting the side surfaces, in particular, the hollow chambers (8) are drop-stitch (9) elements.

4. Recreational vehicle according to one of the preceding claims, **characterized in that** the sanitary cell (13) comprises a shower (14) and/or toilet (15).

5. Recreational vehicle according to one of the preceding claims, **characterized in that** the recreational vehicle is a camper van (3) in which a standard body of a transporter, in particular a sheet-metal body (4), has been converted to include living elements.

6. Recreational vehicle according to claim 5, **characterized in that** the sub-element of the original body is a door element (18).

7. Recreational vehicle according to one of the preceding claims, **characterized in that** a rear push-out unit (2) as boundary wall lateral to the direction of travel comprises inflatable elements at least in sections.

8. Recreational vehicle according to claim 7, **characterized in that** the inflatable elements are formed from hollow chambers (8) which, in their interior, comprise tension elements, such as threads and/or fabric strips, connecting the side surfaces, in particular, the hollow chambers are drop-stitch (9) elements.

9. Recreational vehicle according to any one of claims 7 through 8, **characterized in that** the recreational vehicle is a camper van (3) in which a standard body of a transporter, in particular a sheet-metal body (4), has been converted to include living elements.

10. Recreational vehicle according to claim 9, **characterized in that** the rear push-out unit (2) uses a sub-element of the original body, in particular a rear door or tailgate, as outer boundary wall.

11. Recreational vehicle according to any one of claims 1 through 6 with the further features of one or more of claims 7 through 10.

## Revendications

1. Véhicule de loisirs présentant un agencement intérieur dans lequel, immédiatement derrière une cabine de conduite (10) comportant un siège conducteur (11), se trouve, sur au moins un côté, le long de la paroi latérale, un cabinet de toilette et, du côté opposé, dans la direction d'avance du véhicule, au même niveau ou plus en arrière, est disposé un module de cuisine,
dans lequel le cabinet de toilette (13) se trouve directement derrière la cabine de conduite (10), et dans lequel l'unité d'extension (2) utilise, en tant que paroi de délimitation extérieure, un élément constitutif de la carrosserie d'origine,
**caractérisé en ce que**
le cabinet de toilette (13) est réalisé au moins en partie comme unité d'extension (2) qui peut être déployée afin d'agrandir l'espace, le volume du cabinet de toilette étant agrandi.

2. Véhicule de loisirs selon la revendication 1,
**caractérisé en ce que**
l'unité d'extension (2) présente des éléments gonflables, en tant que parois de délimitation, latéralement par rapport à la direction de déploiement, au moins dans certaines sections.

3. Véhicule de loisirs selon la revendication 2,
**caractérisé en ce que**
les éléments gonflables sont formés de chambres creuses (8) qui présentent à l'intérieur d'elles-mêmes des éléments de traction reliant les surfaces latérales, tels que des fils et/ou des bandes de tissus, les chambres creuses (8) étant en particulier des éléments de type « drop stitch » (9).

4. Véhicule de loisirs selon l'une des revendications précédentes,
**caractérisé en ce que**
le cabinet de toilette (13) comprend une douche (14) et/ou des toilettes (15).

5. Véhicule de loisirs selon l'une des revendications précédentes,
**caractérisé en ce que**
le véhicule de loisirs est un van aménagé (3) dans lequel une carrosserie de série d'un véhicule utilitaire, en particulier une carrosserie en tôle (4), est aménagée avec des éléments d'habitation.

6. Véhicule de loisirs selon la revendication 5,
**caractérisé en ce que**
l'élément constitutif de la carrosserie d'origine est un élément formant porte (18).

7. Véhicule de loisirs selon l'une des revendications précédentes,
**caractérisé en ce que**
une unité d'extension arrière (2) présente des éléments gonflables, en tant que parois de délimitation, latéralement par rapport à une direction de déploiement, au moins dans certaines sections.

8. Véhicule de loisirs selon la revendication 7,
**caractérisé en ce que**
les éléments gonflables sont formés de chambres creuses (8) qui présentent à l'intérieur d'elles-mêmes, des éléments de traction reliant les surfaces latérales, tels que des fils et/ou des bandes de tissus, les chambres creuses étant en particulier des éléments de type « drop stitch » (9).

9. Véhicule de loisirs selon l'une des revendications 7 à 8,
**caractérisé en ce que**
le véhicule de loisirs est un van aménagé (3) dans lequel une carrosserie de série d'un véhicule utilitaire, en particulier une carrosserie en tôle (4), est aménagée avec des éléments d'habitation.

10. Véhicule de loisirs selon la revendication 9,
**caractérisé en ce que**
l'unité d'extension arrière (2) utilise, en tant que parois de délimitation, un élément constitutif de la carrosserie d'origine, en particulier une porte arrière ou un hayon.

11. Véhicule de loisirs selon l'une des revendications 1 à 6, comprenant les caractéristiques supplémentaires d'une ou de plusieurs des revendications 7 à 10.
